# EUROPEAN PATENT APPLICATION

(11) **EP 4 746 100 A1**
(43) Date of publication of application: **20.05.2026**
(21) Application number: 24856611.9
(22) Date of filing: 12.06.2024
(51) Int. Cl.: H01M 10/0565, H01M 10/052

(54) **COMPOSITION FOR GEL POLYMER ELECTROLYTE, GEL POLYMER ELECTROLYTE, AND LITHIUM SECONDARY BATTERY COMPRISING GEL POLYMER ELECTROLYTE**

(30) Priority: 18.08.2023 KR 20230108415
(71) Applicant: SK On Co., Ltd., Seoul 03161 (KR)
(72) Inventor: GO, Hyeon-Jin, Daejeon 34124 (KR); LEE, Han-Sol, Daejeon 34124 (KR); PARK, Myung-Soo, Daejeon 34124 (KR); LEE, Seung-Hwan, Daejeon 34124 (KR)
(74) Representative: Prüfer & Partner mbB Patentanwälte · Rechtsanwälte
(86) International application number: PCT/KR2024/008098
(87) International publication number: WO 2025/041995

(57) **Abstract**

The present disclosure provides: a composition for a gel polymer electrolyte comprising an electrolyte salt, an organic solvent, a polymerizable monomer, a polymerization initiator, and a polymerization inhibitor; a gel polymer electrolyte prepared by using the composition for a gel polymer electrolyte; and a lithium secondary battery comprising the gel polymer electrolyte.

## Description

### Technical Field

The present disclosure relates to a composition for a gel polymer electrolyte, a gel polymer electrolyte, and a lithium secondary battery including the gel polymer electrolyte.

### Background Art

Recently, as interest in environmental issues has grown, exhaust gas emitted from vehicles using fossil fuels such as gasoline or diesel is being pointed out as one of the main causes of air pollution, and as the means for replacing it, a lot of research is being conducted on electric vehicles (EV), hybrid electric vehicles (HEV), and the like. Also, a lithium secondary battery having a high discharge voltage and output stability is mainly used as a power source of the electric vehicles (EV), the hybrid electric vehicles (HEV), and the like.

The lithium secondary battery is divided into a lithium ion battery to which a liquid electrolyte is applied and a lithium polymer battery using a polymer electrolyte, depending on the type of electrolyte applied thereto. Since the lithium ion battery uses a liquid electrolyte, there is a risk of leakage and explosions, which complicates battery design. However, since the lithium polymer battery has improved stability by using a solid polymer electrolyte or a gel polymer electrolyte, development of the lithium polymer battery has been actively undertaken recently.

A lithium secondary battery including a gel polymer electrolyte may be manufactured by dissociating a polymerizable monomer and a polymerization initiator in a liquid electrolyte solution to prepare a composition for a gel polymer electrolyte in a liquid state, injecting the composition for a gel polymer electrolyte into a battery case, and impregnating a battery assembly including a positive electrode, a negative electrode, and a separator with the composition under appropriate temperature and time conditions to form a gel polymer electrolyte.

In the process of impregnating the electrode assembly with the composition for a gel polymer electrolyte, the composition for a gel polymer electrolyte is prematurely cured by a reaction between a monomer and a polymerization initiator to form a gel polymer electrolyte having a non-uniform crosslinking degree and surface, which may reduce secondary battery cell performance due to liquid leakage and the like. Accordingly, a technology to prevent premature curing of the composition for a gel polymer electrolyte is required.

### Summary of Invention

### Technical Problem

An aspect of the present disclosure is to provide a composition for a gel polymer electrolyte including a polymerization inhibitor, a gel polymer electrolyte, and a lithium secondary battery including the gel polymer electrolyte.

### Solution to Problem

According to an aspect of the present disclosure, a composition for a gel polymer electrolyte includes: an electrolyte salt, an organic solvent, a polymerizable monomer, a polymerization initiator, and a polymerization inhibitor.

The polymerization inhibitor may include at least one selected from the group consisting of an aromatic compound including a hydroxy group or an alkoxy group, a quinone-based compound, a phenothiazine-based compound, and a nitrosobenzene-based compound.

The aromatic compound including a hydroxy group or an alkoxy group may include two or more hydroxy groups or two or more alkoxy groups.

The aromatic compound including a hydroxy group or an alkoxy group may further include a nitro group or an alkyl group.

The aromatic compound including a hydroxy group or an alkoxy group may include a single ring or a fused ring in which two or more single rings are fused.

The polymerization inhibitor may include at least one selected from the group consisting of 4-methoxyphenol (MEHQ), 1,2-benzoquinone, 4-tert-butylcatechol (TBC), nitrosobenzene, picric acid, t-butylhydroquinone (TBHQ), hydroquinone, p-methoxyphenol, phenothiazine, tert-butylhydroquinone, 2,6-di-tert-butyl-p-cresol, 2-tert-butyl-1,4-benzoquinone, 6-tert-butyl-2,4-xylenol, 2,6-di-tert-butylphenol, 6-tert-butyl-2,4-xylenol, and 2,6-di-tert-butylphenol.

The polymerization inhibitor may be included at 150 ppm or less based on the total weight of the composition for a gel polymer electrolyte.

The polymerizable monomer may have a polymerizable functional group including at least one group selected from the group consisting of a vinyl group, an epoxy group, an allyl group, an acryl group, a (meth)acryl group, an ether group, and fluorine (F), as well as a phosphate group.

The polymerizable monomer may include three or more of the polymerizable functional group.

The polymerizable monomer may include a phosphate group, an acrylate group, and an ether group.

The polymerizable monomer including the phosphate group may include an electron donating group (EGD).

According to another aspect of the present disclosure, a gel polymer electrolyte includes: a polymerizable polymer, an electrolyte salt, an organic solvent, a polymerization initiator, and a polymerization inhibitor.

The polymerization inhibitor may include at least one selected from the group consisting of an aromatic compound including a hydroxy group or an alkoxy group, a quinone-based compound, a phenothiazine-based compound, and a nitrosobenzene-based compound.

The polymerization inhibitor may include at least one selected from the group consisting of 4-methoxyphenol (MEHQ), 1,2-benzoquinone, 4-tert-butylcatechol (TBC), nitrosobenzene, picric acid, t-butylhydroquinone (TBHQ), hydroquinone, p-methoxyphenol, phenothiazine, tert-butylhydroquinone, 2,6-di-tert-butyl-p-cresol, 2-tert-butyl-1,4-benzoquinone, 6-tert-butyl-2,4-xylenol, 2,6-di-tert-butylphenol, 6-tert-butyl-2,4-xylenol, and 2,6-di-tert-butylphenol.

According to still another aspect of the present disclosure, a lithium secondary battery includes: the gel polymer electrolyte, and a positive electrode and a negative electrode impregnated with the gel polymer electrolyte.

### Advantageous Effects of Invention

According to an aspect of the present disclosure, the composition for a gel polymer electrolyte may prevent premature polymerization between polymerizable monomers at room temperature by including a polymerization inhibitor.

A gel polymer electrolyte prepared by the composition for a gel polymer electrolyte may have a uniform crosslinking degree.

The storage of the composition for a gel polymer electrolyte at room temperature may be improved, and the processability of an impregnation process of the composition for a gel polymer electrolyte may be improved.

The gel polymer electrolyte may be uniformly impregnated into an electrode assembly by improving the impregnability of the gel polymer electrolyte.

Secondary battery cell performance may be improved by including the gel polymer electrolyte of an implementation example of the present disclosure.

### Brief Description of Drawings

FIG. 1 is an image illustrating whether a polymerization inhibitor is dissolved in the compositions for a gel polymer electrolyte of the examples and the comparative examples of the present disclosure.
FIG. 2 is a graph illustrating whether a polymerization inhibitor is detected from the compositions for a gel polymer electrolyte of the examples and the comparative examples of the present disclosure.
FIG. 3 is a graph illustrating a detected amount of a polymerization inhibitor in the composition for a gel polymer electrolyte of the example of the present disclosure.
FIG. 4 is an image illustrating whether the composition for a gel polymer electrolyte was polymerized when the compositions for a gel polymer electrolyte of the examples and the comparative examples were stored at room temperature.
FIG. 5 is an image illustrating whether the compositions for a gel polymer electrolyte were polymerized during polymerization of the compositions for a gel polymer electrolyte of the examples and the comparative examples of the present disclosure at a high temperature.

### Best Mode for Invention

The composition for a gel polymer electrolyte according to the present disclosure may include: an electrolyte salt, an organic solvent, a polymerizable monomer, a polymerization initiator, and a polymerization inhibitor. In addition, the composition for a gel polymer electrolyte may further include an additive.

### Electrolyte salt

The electrolyte salt is used as a medium for transferring ions in a secondary battery and may not be particularly limited as long as it is commonly used as an electrolyte salt for a secondary battery.

In example embodiments, the electrolyte salt may be a lithium salt, and for example, may include Li⁺ as a cation and include at least one selected from the group consisting of F⁻, Cl⁻, Br⁻, BF₄⁻, I⁻, NO₃⁻, N(CN)₂⁻, ClO₄⁻, AlO₄⁻, AlCl₄⁻, PF₆⁻, SbF₆⁻, AsF₆⁻, BF₂C₂O₄⁻, BC₄O₈⁻, (CF3)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, as an anion. In an example embodiment, the electrolyte salt may include at least one selected from the group consisting of LiPF₆, lithium bisperfluoroethanesulfonimide (LiBETI, LiN(SO₂C₂F₅)₂), lithium fluorosulfonyl imide (LiFSI, LiN(SO₂F)₂), lithium (bis)trifluoromethanesulfonimide (LATEST, LiN(SO₂CF₃)₂), and lithium difluoro(oxalato) borate (LiDFOB).

In an example embodiment, the electrolyte salt may be included at a concentration of about 0.5 to about 2 M, specifically about 0.8 to about 1.5 M in the composition for a gel polymer electrolyte. Since the electrolyte salt is included in the composition for a gel polymer electrolyte at the concentration within the above range, an optimal anti-corrosion coating is formed on the surface of an electrode, resistance due to lithium ion depletion during high-rate charging and discharging is decreased, high ion transfer characteristics, that is, ion transference number of lithium ions is secured due to the increased lithium ions in the composition for a gel polymer electrolyte, and diffusion resistance of lithium ions is decreased, thereby improving cycle capacity characteristics, ion conductivity, and rate-limiting characteristics.

### Organic solvent

The organic solvent is a non-aqueous organic solvent and may not be particularly limited as long as decomposition by an oxidation reaction and the like is minimized in the process of charging and discharging of a secondary battery, and the desired characteristics may be exhibited with an additive.

In example embodiments, the organic solvent may be, for example, a carbonate-based organic solvent, an ether-based organic solvent, an ester-based organic solvent, and the like alone or in combination of two or more.

In example embodiments, the carbonate-based organic solvent may include at least one of a cyclic carbonate-based organic solvent and a linear carbonate-based organic solvent.

In an example embodiment, the cyclic carbonate-based organic solvent may include at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and fluoroethylene carbonate (FEC). The cyclic carbonate-based organic solvent may include a mixed solvent of ethylene carbonate having a high dielectric constant and propylene carbonate having a lower melting point than ethylene carbonate.

In an example embodiment, the linear carbonate-based organic solvent is a solvent having low viscosity and low dielectric constant and may include at least one selected from the group consisting of dimethyl carbonate (DMC), diethyl carbonate (DEC), dipropyl carbonate, ethyl methyl carbonate (EMC), methyl propyl carbonate, and ethyl propyl carbonate.

In example embodiments, the ether-based organic solvent may include any one or a mixture of two or more selected from the group consisting of dimethyl ether, diethyl ether, dipropyl ether, methyl ethyl ether, methyl propyl ether, and ethyl propyl ether.

In example embodiments, the ester-based organic solvent may be at least one selected from the group consisting of linear ester-based organic solvents and cycle ester-based organic solvents.

In an example embodiment, the linear ester-based organic solvent may include any one or a mixture of two or more selected from the group consisting of methyl acetate, ethyl acetate, propyl acetate, methyl propionate, ethyl propionate, propyl propionate, and butyl propionate.

In an example embodiment, a specific example of the cyclic ester-based organic solvent may include any one or a mixture of two or more selected from the group consisting of γ-butyrolactone, γ-valerolactone, γ-caprolactone, σ-valerolactone, and ε-caprolactone.

### Polymerizable monomer

The polymerizable monomer may have a polymerizable functional group including at least one group selected from the group consisting of a vinyl group, an epoxy group, an allyl group, an acryl group, a (meth)acryl group, an ether group, and fluorine (F), as well as a phosphate group, which may cause a polymerization reaction, and may be changed into a gel phase by polymerization or crosslinking. Herein, the acryl group includes an acrylate group, and the (meth)acryl group may include an acryl group and a methacryl group.

The polymerizable monomer may not be particularly limited as long as it is used as a monomer for a gel polymer electrolyte.

In example embodiment, the polymerizable monomer may include three or more of the polymerizable functional group. Specifically, the polymerizable monomer may include a phosphate group, an acrylate group, and an ether group. More specifically, the polymerizable monomer may include, for example, at least one selected from the group consisting of tetraethylene glycol diacrylate, polyethylene glycol diacrylate (molecular weight: 50-20,000), 1,4-butanediol diacrylate, 1,6-hexandiol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidyl ether, 1,5-hexadiene diepoxide, glycerol propoxylate triglycidyl ether, vinylcyclohexene dioxide, 1,2,7,8-diepoxyoctane, 4-vinylcyclohexene dioxide, butyl glycidyl ether, diglycidyl 1,2-cyclohexanedicarboxylate, ethylene glycol diglycidyl ether, glycerol triglycidyl ether, and glycidyl methacrylate.

Meanwhile, the gel polymer electrolyte prepared by the composition for a gel polymer electrolyte may have flame retardance by the polymerizable monomer including a phosphate group having flame retardancy.

In an example embodiment, the polymerizable monomer including a phosphate group may include an electron donating group (EGD).

In an example embodiment, the polymerizable monomer may be included at about 2 to about 30 wt%, specifically about 2 to about 20 wt%, and more specifically about 4 to about 10 wt%, based on the total weight of the composition for a gel polymer electrolyte. Since the polymerizable monomer is included within the range based on the total weight of the composition for a gel polymer electrolyte, the polymerizable monomer forms a sufficient crosslinking network and improve ion conductivity of an electrolyte to improve capacity expression and capacity retention rate of a secondary battery.

### Polymerization initiator

The polymerization initiator may be a thermal- or photo-polymerization initiator. The polymerization initiator is decomposed by heat or light to form radicals, and a polymerization reaction between polymerizable monomers may be initiated by the radicals.

In example embodiments, it may include one or more azo compounds selected from the group consisting of organic hydrogen peroxides hydroperoxides such as benzoyl peroxide, acetyl peroxide, dilauryl peroxide, di-tert-butyl peroxide, t-butyl peroxy-2-ethyl-hexanoate, t-butyl peroxypivalate, cumyl hydroperoxide, and hydrogen peroxide, and 2,2'-azobis(2-cyanobutane), 2,2'-azobis(methyl butyronitrile), 2,2'-azobis(iso-butyronitrile) (AIBN), and 2,2'-azobisdimethyl-vleronitrile (AMVN).

In an example embodiment, the polymerization initiator is decomposed by heat, that is at a temperature of about 50°C and about 90°C to form radicals and may initiate a polymerization reaction between polymerizable monomers.

In an example embodiment, the polymerization initiator may be included at about 0.025 to about 0.3 wt% based on the total weight of the composition for a gel polymer electrolyte. When the polymerization initiator is included at more than about 0.3 wt% based on the total weight of the composition for a gel polymer electrolyte, the polymerization reaction between the polymerizable monomers is initiated before the curing temperature of the composition for a gel polymer electrolyte is reached, and the composition for a gel polymer electrolyte may be prematurely cured. When the polymerization initiator is included at less than about 0.025 wt% based on the total weight of the composition for a gel polymer electrolyte, the polymerization reaction between the polymerizable monomers is not sufficiently initiated, so that the polymerizable monomers may not form a sufficient crosslinking network.

### Polymerization inhibitor

The polymerization inhibitor may prevent premature polymerization between the polymerizable monomers. Specifically, the polymerization inhibitor rapidly reacts with radicals formed from the polymerization initiator to stabilize radicals, thereby preventing premature polymerization between the polymerizable monomers.

In example embodiments, the polymerization inhibitor may include at least one selected from the group consisting of an aromatic compound including a hydroxy group or an alkoxy group, a quinone-based compound, a phenothiazine-based compound, and a nitrosobenzene-based compound.

In an example embodiment, the aromatic compound including a hydroxy group or an alkoxy group may include two or more hydroxy groups or two or more alkoxy groups.

In an example embodiment, the aromatic compound including a hydroxy group or an alkoxy group may further include a nitro group or an alkyl group.

In an example embodiment, the aromatic compound including a hydroxy group or an alkoxy group may include a single ring or a fused ring in which two or more single rings are fused.

Specifically, the aromatic compound including a hydroxy group or an alkoxy group may include at least one selected from the group consisting of, for example, 4-methoxyphenol (MEHQ), 4-tert-butylcatechol (TBC), picric acid, t-butylhydroquinone (TBHQ), hydroquinone, p-methoxyphenol, tert-butylhydroquinone, 6-tert-butyl-2,4-xylenol, 2,6-di-tert-butylphenol, and dibutylhydroxytoluene (BHT).

Specifically, the quinone-based compound may include, for example, 1,2-benzoquinone or 2-tert-butyl-1,4-benzoquinone, the phenothiazine-based compound may include, for example, phenothiazine, and the nitrosobenzene-based compound may include, for example, nitrosobenzene.

In an example embodiment, the polymerization inhibitor may be included at about 150 ppm or less, specifically about 5 to about 100 ppm, more specifically about 10 to about 100 ppm, about 15 to about 80 ppm, about 20 to 80 ppm, or about 20 to about 50 ppm, based on the total weight of the composition for a gel polymer electrolyte. When the polymerization inhibitor is included within the range, dissolubility of the polymerization inhibitor and curability of the composition for a gel polymer electrolyte are excellent while suppressing premature polymerization between the polymerizable monomers, and thus, a gel polymer electrolyte in which a liquid electrolyte is gelled so as not to be separated from gel while having uniform crosslinking degree and surface may be formed.

### Additive

The additive prevents induction of negative electrode collapse by decomposition of the composition for a gel polymer electrolyte in a high output environment during preparation of the gel polymer electrolyte and may be included in the composition for a gel polymer electrolyte for formation of a more stable ion conductive coating on an electrode surface and the like.

In example embodiments, the additive may include at least one selected from the group consisting of sultone-based compounds, sulfite-based compounds, sulfone-based compounds, sulfate-based compounds, halogen-substituted carbonate-based compounds, nitrile-based compound, cyclic carbonate-based compounds, phosphate-based compounds, borate-based compounds, lithium salt-based compounds, and fluorine-based compounds.

As described above, the polymerizable monomers may be prematurely polymerized by the polymerization initiator. In particular, when the polymerizable monomer includes the monomer having a phosphate group having flame retardancy, the monomer having a phosphate group includes an electron donating group to more accelerate premature polymerization between the polymerizable monomers, and the premature polymerization may occur even at room temperature.

However, in example embodiments, since the composition for a gel polymer electrolyte includes the polymerization inhibitor, the premature polymerization between the polymerizable monomers at room temperature may be prevented. Accordingly, the gel polymer electrolyte prepared by the composition for a gel polymer electrolyte may a uniform crosslinking degree while having flame retardancy. Thus, the storage of the composition for a gel polymer electrolyte at room temperature may be improved, and the processability of an impregnation process of the composition for a gel polymer electrolyte may be improved. As a result, the impregnability of the gel polymer electrolyte is improved so that the gel polymer electrolyte is uniformly impregnated into an electrode assembly, and thus, secondary battery cell performance may be improved.

Hereinafter, a process of preparing a gel polymer electrolyte prepared by the composition for a gel polymer electrolyte will be described. While describing the process, the effect of the present disclosure from the composition for a gel polymer electrolyte described above including the polymerization inhibitor will be described in more detail.

First, the electrolyte salt, the polymerizable monomer, the polymerization inhibitor, and the additive may be dissolved in the organic solvent.

In an example embodiment, the electrolyte salt, the polymerizable monomer, the polymerization inhibitor, and the additive may be dissolved in the organic solvent by performing stirring at room temperature for about 1 hour or more.

Thereafter, the polymerization initiator may be dissolved in the organic solvent at room temperature to prepare the composition for a gel polymer electrolyte.

Thereafter, the composition for a gel polymer electrolyte may be stored at room temperature for a certain period of time before being injected into a battery case. Since the composition for a gel polymer electrolyte includes the polymerization inhibitor, premature polymerization of the polymerizable monomers at room temperature is prevented, and thus, the composition may be stored in a liquid phase without changing into a gel phase. In an example embodiment, the composition for a gel polymer electrolyte may be stored at a temperature of about 30°C or lower for about 24 hours.

Thereafter, the composition for a gel polymer electrolyte is injected into a battery case, and impregnated into an electrode assembly including a positive electrode and a negative electrode at room temperature for a certain period of time, thereby preparing a gel polymer electrolyte. Since the composition for a gel polymer electrolyte includes the polymerization inhibitor, premature polymerization between the polymerizable monomers at room temperature is prevented, and thus, the gel polymer electrolyte may be uniformly impregnated into the electrode assembly. In an example embodiment, the impregnation process may be performed at a temperature of about 30°C or lower for about 10 hours or more.

Thereafter, the composition for a gel polymer electrolyte is heated and cured, thereby forming the gel polymer electrolyte. Since the composition for a gel polymer electrolyte is stored at room temperature and premature polymerization is prevented by the polymerization inhibitor during the impregnation of the electrode assembly, when the composition for a gel polymer electrolyte is heated and cured, the gel polymer electrolyte having a uniform crosslinking degree may be formed.

In example embodiments, the impregnation process may further include a degassing process. The degassing process may remove gas present in the battery case before the composition for a gel polymer electrolyte is cured.

Thus, the gel polymer electrolyte may be prepared.

When the composition for a gel polymer electrolyte does not include the polymerization inhibitor, the polymerizable monomers are prematurely polymerized during the storage of the composition for a gel polymer electrolyte at room temperature, so that at least a part of the composition for a gel polymer electrolyte may be cured. Thereafter, since the composition for a gel polymer electrolyte is injected into the battery case, the composition for a gel polymer electrolyte may be completely cured in the impregnation process, before a process temperature and a process time are reached. Thus, a gel polymer electrolyte having a non-uniform crosslinking degree is formed, so that the gel polymer electrolyte may be non-uniformly impregnated into the battery assembly.

However, in example embodiments, since the composition for a gel polymer electrolyte includes the polymerization inhibitor, the composition for a gel polymer electrolyte may prevent premature polymerization between polymerizable monomers during the storage at room temperature. Accordingly, the storability of the composition for a gel polymer electrolyte may be improved.

In addition, since an uncured composition for a gel polymer electrolyte is injected into the battery case, the composition for a gel polymer electrolyte may be cured at a process temperature for a process time in the impregnation process. Accordingly, a gel polymer electrolyte having a uniform crosslinking degree is formed and may be uniformly impregnated into the battery assembly. That is, the processability of the impregnation process of the composition for a gel polymer electrolyte may be improved.

Meanwhile, the gel polymer electrolyte may include a polymerizable polymer formed by crosslinking of the polymerizable monomers, the electrolyte salt, the organic solvent, the polymerization initiator, and the polymerization inhibitor.

In addition, the secondary battery may include the gel polymer electrolyte, and the positive electrode and the negative electrode impregnated with the gel polymer electrolyte.

The positive electrode is not particularly limited, and lithium-transition metal oxides such as lithium cobalt oxide (LiCoO₂), lithium manganese oxide (LiMn₂O₄), or lithium nickel oxide (LiNiO₂), or lithium-transition metal composite oxide in which a part of the transition metals are substituted other transition metals.

For example, the lithium-transition oxide includes nickel (Ni), and may further include at least one selected from the group consisting of cobalt (Co) or manganese (Mn). For example, the positive electrode active material may include an NCM-based positive electrode active material; a Mn-rich-based positive electrode active material; or LLO (Li rich layered oxides, over lithiated oxides, over-lithiated layered oxide, OLO, LLOs)-based positive electrode active material. For example, the lithium-transition metal oxide may have structures represented by the following Chemical Formulae 1 to 3:

[Chemical Formula 1] LiₐNi_{b}M₁₋ₙO₂

wherein 0.9≤a≤1.2, b≥0.5, and M is at least one of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba, and Zr. Specifically, in Chemical Formula 1, 0.95≤a≤1.08, and b may be 0.6 or more, 0.8 or more, more than 0.8, 0.9 or more, or 0.98 or more. Specifically, in Chemical Formula 1, M may include Co, Mn, or Al, more specifically, M may include Co and Mn, and optionally, further include Al.

[Chemical Formula 2] pLi₂MnO₃ · (1-p)Li_{q}JO₂

wherein 0<p<1, 0.9≤q≤1.2, J is one or more elements selected from the group consisting of Mn, Ni, Co, Fe, Cr, V, Cu, Zn, Ti, Al, Mg, and B.

[Chemical Formula 3] Li₁₊ₓM₁₋ₓO₂

wherein 0≤x≤0.4, and M is at least one of Na, Mg, Ca, Y, Ti, Zr, Hf, V, Nb, Ta, Cr, Mo, W, Ni, Mn, Co, Fe, Cu, Ag, Zn, B, Al, Ga, C, Si, Sn, Ba, and Zr. Specifically, in Chemical Formula 3, M may include Ni, Co, Mn, or Al, more specifically may include Ni, Co, and Mn, and optionally further include Al.

In addition, the positive electrode active material may be a lithium iron phosphate (LFP)-based positive electrode active material represented by the chemical formula LiFePO₄.

In addition, the lithium-transition metal oxide may be a secondary particle substantially formed into one particle by assembling or aggregating a plurality of primary particles, or in a single particle form. The single particle form may mean exclusion of secondary particle substantially formed into one particle by assembling or aggregating a plurality of primary particles (for example, more than 10). However, the single particle form does not exclude having substantially a single body form (for example, a structure converted into a single particle) by adhering or closely adhering 2 to 10 single particles to each other. In some example embodiment, the positive electrode active material may include both a secondary particle form and a single particle form.

The negative electrode is not particularly limited, and a carbon-based active material such as artificial graphite and natural graphite, a silicon-based active material such as a silicon oxide (SiOₓ; 0<x<2), a Si-C composite, and pure Si, and metals such as lithium metal and a lithium-metal alloy may be included as a negative electrode active material.

Meanwhile, the lithium secondary battery may be an anodeless secondary battery. That is, it may be a battery in which a negative electrode active material layer is not formed on a negative electrode current collector in a battery assembly process. When the anodeless lithium secondary battery is initially charged or first charged, a main positive electrode active material and a sacrificial positive electrode active material are de-lithiated, and lithium ions produced from the positive electrode active material may be reduced on the negative electrode current collector to form a lithium layer of a lithium metal layer or a solid lithium layer.

### Mode for Invention

Hereinafter, the present disclosure will be described in more detail by way of examples. The following examples show an example of the present disclosure, and the present disclosure is not limited thereby.

### Examples 1 to 4 and Comparative Examples 1 to 3

A polymerizable monomer and a polymerization inhibitor were dissolved in a composition in which LiPF₆, ethyl carbonate, and ethyl methyl carbonate were mixed at 12.3 wt%, 31.5 wt%, and 56.2 wt%, respectively, based on the total weight of LiPF₆, ethyl carbonate, and ethyl methyl carbonate at room temperature for 2 hours with stirring. Thereafter, the polymerization initiator was dissolved at room temperature to prepare a composition for a gel polymer electrolyte.

2-[(Dimethoxyphosphoryl)oxy]ethyl acrylate was used as the polymerizable monomer, and this was included at 7.5 wt% in the composition for a gel polymer electrolyte.

t-Butyl peroxypivalate was used as the polymerization initiator, and this was included in the composition for a gel polymer electrolyte at 1 wt% of the total weight of the polymerizable monomer.

4-Methoxyphenol was used as the polymerization inhibitor, and this was included in the composition for a gel polymer electrolyte at the contents as shown in Table 1.

**[Table 1]**

| | Polymerization inhibitor (ppm) |
|---|---|
| Example 1 | 20 |
| Example 2 | 40 |
| Example 3 | 50 |
| Example 4 | 80 |
| Comparative Example 1 | 0 |
| Comparative Example 2 | 10 |
| Comparative Example 3 | 100 |

**Whether polymerization inhibitor was dissolved**

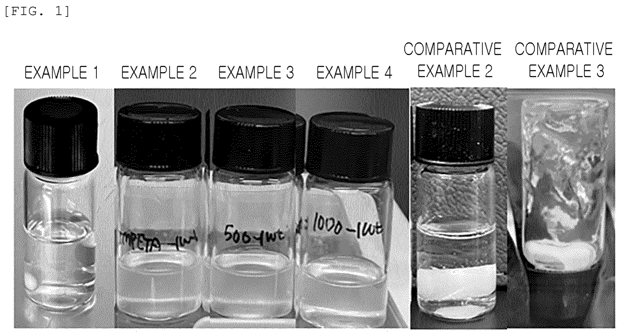

An electrolyte salt, the polymerizable monomer, and the polymerization inhibitor were dissolved in an organic solvent at room temperature (25°C) for 2 hours with stirring, and then the polymerization initiator was added to the organic solvent at room temperature. Thereafter, it was evaluated whether the polymerization inhibitor was dissolved in the composition for a gel polymer electrolyte (see FIG. 1), while the organic solvent to which the polymerization initiator was added was allowed to stand at room temperature, and the results are shown in the following Table 2.

### Whether polymerization inhibitor was detected and its detected amount

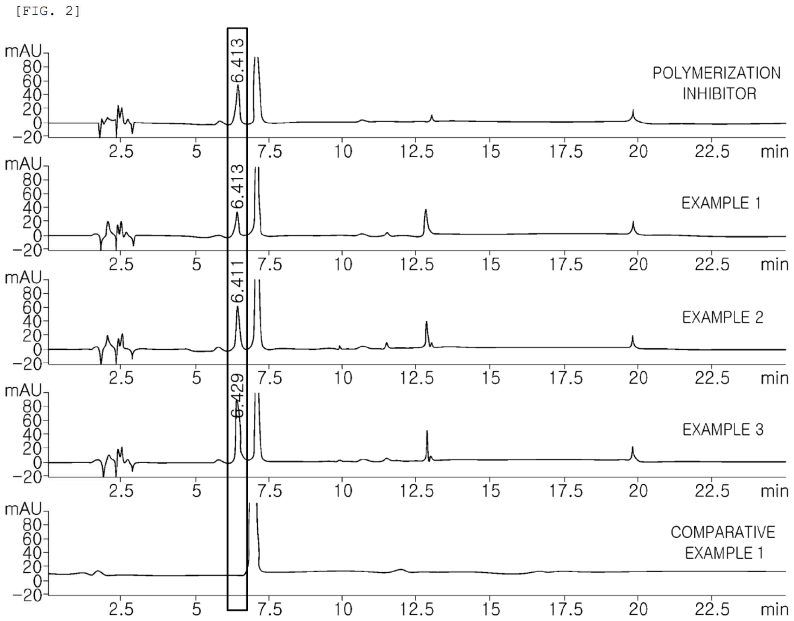

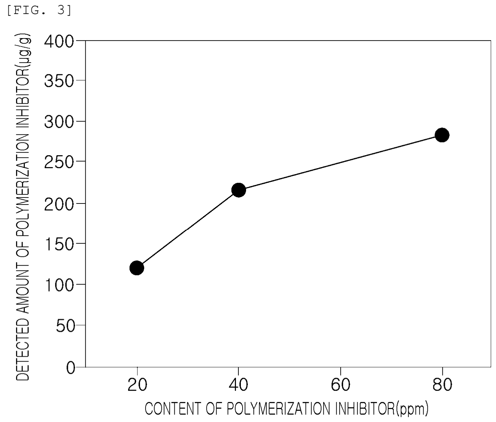

High performance liquid chromatography (HPLC) analysis of the polymerization inhibitor and the compositions for a gel polymer electrolyte of Examples 1 to 3 and Comparative Example 2 was performed. Whether the polymerization inhibitor was detected in the composition for a gel polymer electrolyte and its detected amount were confirmed by HPLC analysis (see FIGS. 2 and 3), and the results are shown in the following Table 2.

Meanwhile, regarding whether the polymerization inhibitor was detected, since the polymerization inhibitor showed a peak at 6.413 min, when the peak is shown at a similar time to 6.413 min in FIG. 2, it was determined that the polymerization inhibitor was detected.

Furthermore, the detected amounts depending on the contents of the polymerization inhibitor added to the gel polymer electrolytes of Examples 1, 2, and 4 are shown in FIG. 3.

**[Table 2]**

| | Whether polymerization inhibitor was dissolved | Whether polymerization inhibitor was detected |
|---|---|---|
| Example 1 | ○ | ○ |
| Example 2 | ○ | ○ |
| Example 3 | ○ | ○ |
| Example 4 | ○ | ○ |
| Comparative Example 1 | - | × |
| Comparative Example 2 | ○ | - |
| Comparative Example 3 | × | - |

**Whether polymerization was performed at room temperature (25°C)**

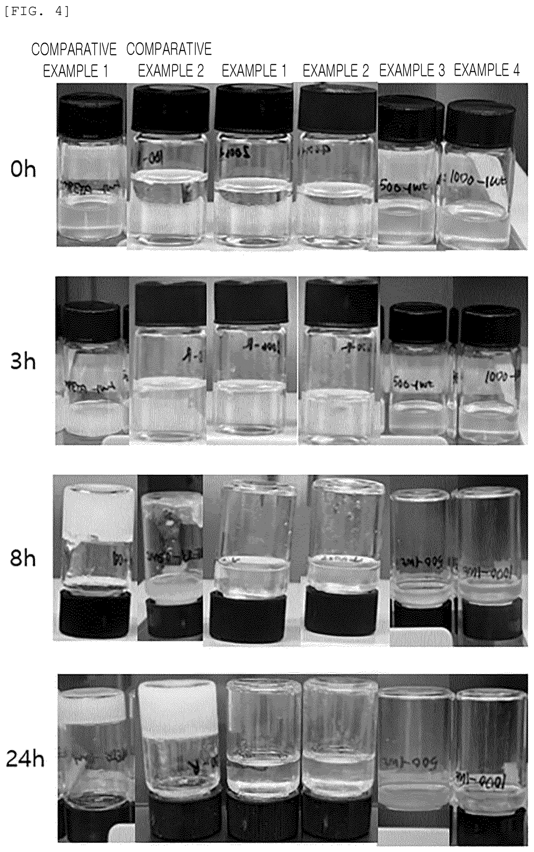

The compositions for a gel polymer electrolyte of Examples 1 to 4 and Comparative Examples 1 and 2 were stored at room temperature (25°C). It was confirmed whether the composition for a gel polymer electrolyte was polymerized after 0, 3, 8, and 24 hours (see FIG. 4), and the results are shown in the following Table 3.

### Whether polymerization was performed at high temperature (70°C)

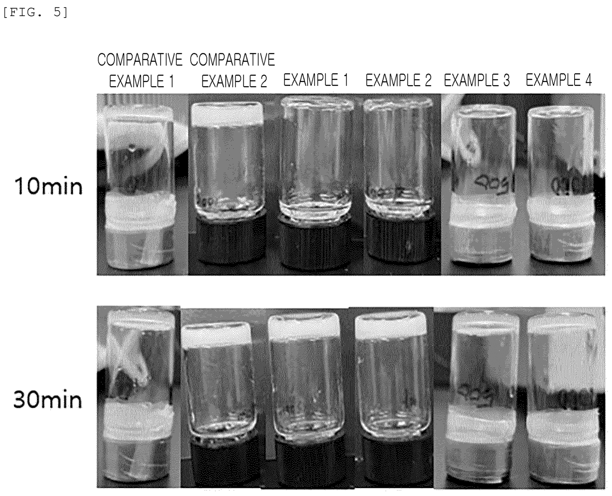

The compositions for a gel polymer electrolyte of Examples 1 to 4 and Comparative Examples 1 and 2 were polymerized at a high temperature (70°C). It was confirmed whether the composition for a gel polymer electrolyte was polymerized after 10 and 30 minutes (see FIG. 5), and the results are shown in the following Table 3.

**[Table 3]**

| | Time | Example 1 | Example 2 | Example 3 | Example 4 | Comparative Example 1 | Comparative Example 2 | Comparative Example 3 |
|---|---|---|---|---|---|---|---|---|
| Whether polymerization was performed at room temperature | 0 h | × | × | × | × | × | × | - |
| | 3 h | × | × | × | × | ○ | ○ | - |
| | 8 h | × | × | × | × | ○ | ○ | - |
| | 24 h | × | × | × | × | ○ | ○ | - |
| Whether polymerization was performed at high temperature | 10 min | × | × | × | × | ○ | ○ | - |
| | 30 min | ○ | ○ | ○ | ○ | ○ | ○ | - |

As seen from Table 2 and FIG. 1, it was confirmed that the polymerization inhibitors of Examples 1 to 4 and Comparative Example 2 were dissolved in an organic solvent, and the polymerization inhibitor of Comparative Example 3 was saturated in the organic solvent and swelled. It was found therefrom that when the polymerization inhibitor was included at a content of 10 to 80 ppm in the composition for a gel polymer electrolyte, the polymerization inhibitor was able to be dissolved in the organic solvent well.

In addition, as seen from Table 2 and FIG. 2, it was confirmed that the compositions for a gel polymer electrolyte of Examples 1 to 3 showed a peak at a similar time to 6.413 min, but the composition for a gel polymer electrolyte of Comparative Example 1 did not show a peak at a similar time to 6.413 min. It was found therefrom that the composition for a gel polymer electrolyte of the present disclosure included the polymerization inhibitor.

Meanwhile, it was found from FIG. 3 that as the content of the polymerization inhibitor added to the composition for a gel polymer electrolyte was higher, a larger amount of the polymerization inhibitor was detected.

In addition, as seen from Table 3 and FIG. 4, it was confirmed that when the compositions for a gel polymer electrolyte of Examples 1 to 4 and Comparative Examples 1 and 2 were stored at room temperature, the compositions for a gel polymer electrolyte of Examples 1 to 4 were not polymerized even after 0, 3, 8, and 24 hours. Meanwhile, the compositions for a gel polymer electrolyte of Comparative Examples 1 and 2 were not polymerized after 0 hour, but were polymerized after 3, 8, and 24 hours. It was found therefrom that when the polymerization inhibitor was stored at 20 to 80 ppm in the composition for a gel polymer electrolyte, even in the case in which the composition for a gel polymer electrolyte was stored at room temperature for 24 hours, the composition for a gel polymer electrolyte was not polymerized. That is, it was found that the composition for a gel polymer electrolyte of the present disclosure included 20 to 80 ppm of the polymerization inhibitor, and was stored in a liquid state and injected to the battery case.

In addition, as seen from Table 3 and FIG. 5, it was confirmed that when the compositions for a gel polymer electrolyte of Examples 1 and 4 and Comparative Examples 1 and 2 were polymerized at room temperature, the compositions for a gel polymer electrolyte of Examples 1 to 4 were not polymerized after 10 minutes and were polymerized after 30 minutes. Meanwhile, it was confirmed that the compositions for a gel polymer electrolyte of Comparative Examples 1 and 2 were polymerized after 10 and 30 minutes.

It was found therefrom that when the polymerization inhibitor was included at 20 to 80 ppm in the composition for a gel polymer electrolyte, even in the case of performing the polymerization of the composition for a gel polymer electrolyte at a high temperature for 10 minutes, the composition for a gel polymer electrolyte was not polymerized and was polymerized after polymerization for 30 minutes.

That is, it was confirmed that since the impregnation process of the present disclosure was performed at least for 10 minutes, and the composition for a gel polymer electrolyte included 20 to 80 ppm of the polymerization inhibitor, the gel polymer electrolyte was not prematurely polymerized, and the gel polymer electrolyte having a uniform crosslinking degree during curing may be formed. Also, it was found that even when the composition for a gel polymer electrolyte included 20 to 80 ppm of the polymerization inhibitor, the composition for a gel polymer electrolyte was not permanently polymerized.

Hereinabove, although the example embodiments of the present disclosure have been described in detail, they are only illustrative, and it will be appreciated by those skilled in the art that various modifications and other equivalent example embodiments are possible therefrom. Accordingly, the true technical protection scope of the present disclosure should be determined by the spirit of the appended claims.

Specific implementations described in the examples are example embodiments and do not limit the scope of the example embodiments by any way. In addition, when there is no specific mention such as "essential" and "important", it may not a constituent element necessary for the application of the present disclosure.

In the specification (in particular, the claims) of the examples, the use of the term "the" and similar referential terms may correspond to both singular and plural. In addition, when the range is described in the examples, it includes a disclosure to which an individual value belonging to the range is applied (unless otherwise stated), and it may be the same as the description of each individual value forming the range in the detailed description. Finally, unless there is any clear description of the order of the steps forming the method according to the example or any description contrary thereto, the steps may be performed in any appropriate order. The examples are not necessarily limited to the described order of the steps. In the examples, the use of all examples or exemplary terms (for example, and the like) is simply for describing the examples in detail, and unless it is defined in the claims, the scope of the examples is not limited by the examples or exemplary terms. In addition, a person skilled in the art may understand that constitution may be made by the design conditions and factors within the claims with various modifications, combinations, and variations added or the scope of the equivalents.

## Claims

1. A composition for a gel polymer electrolyte comprising: an electrolyte salt, an organic solvent, a polymerizable monomer, a polymerizable initiator, and a polymerization inhibitor.

2. The composition for a gel polymer electrolyte of claim 1, wherein the polymerization inhibitor includes at least one selected from the group consisting of an aromatic compound including a hydroxy group or an alkoxy group, a quinone-based compound, a phenothiazine-based compound, and a nitrosobenzene-based compound.

3. The composition for a gel polymer electrolyte of claim 2, wherein the aromatic compound including a hydroxy group or an alkoxy group includes two or more hydroxy groups or two or more alkoxy groups.

4. The composition for a gel polymer electrolyte of claim 2, wherein the aromatic compound including a hydroxy group or an alkoxy group further includes a nitro group or an alkyl group.

5. The composition for a gel polymer electrolyte of claim 2, wherein the aromatic compound including a hydroxy group or an alkoxy group includes a single ring or a fused ring in which two or more single rings are fused.

6. The composition for a gel polymer electrolyte of claim 1, wherein the polymerization inhibitor includes at least one selected from the group consisting of 4-methoxyphenol (MEHQ), 1,2-benzoquinone, 4-tert-butylcatechol (TBC), nitrosobenzene, picric acid, t-butylhydroquinone (TBHQ), hydroquinone, p-methoxyphenol, phenothiazine, tert-butylhydroquinone, 2,6-di-tert-butyl-p-cresol, 2-tert-butyl-1,4-benzoquinone, 6-tert-butyl-2,4-xylenol, 2,6-di-tert-butylphenol, 6-tert-butyl-2,4-xylenol, and 2,6-di-tert-butylphenol.

7. The composition for a gel polymer electrolyte of claim 1, wherein the polymerization inhibitor is included at 150 ppm or less based on the total weight of the composition for a gel polymer electrolyte.

8. The composition for a gel polymer electrolyte of claim 1, wherein the polymerizable monomer has a polymerizable functional group including at least one group selected from the group consisting of a vinyl group, an epoxy group, an allyl group, an acryl group, a (meth)acryl group, an ether group, and fluorine (F), as well as a phosphate group.

9. The composition for a gel polymer electrolyte of claim 8, wherein the polymerizable monomer includes three or more polymerizable functional groups.

10. The composition for a gel polymer electrolyte of claim 8, wherein the polymerizable monomer includes a phosphate group, an acrylate group, and an ether group.

11. The composition for a gel polymer electrolyte of claim 8, wherein the polymerizable monomer including the phosphate group includes an electron donating group (EDG).

12. A gel polymer electrolyte comprising: a polymerizable polymer, an electrolyte salt, an organic solvent, a polymerization initiator, and a polymerization inhibitor.

13. The gel polymer electrolyte of claim 12, wherein the polymerization inhibitor includes at least one selected from the group consisting of an aromatic compound including a hydroxy group or an alkoxy group, a quinone-based compound, a phenothiazine-based compound, and a nitrosobenzene-based compound.

14. The gel polymer electrolyte of claim 12, wherein the polymerization inhibitor includes at least one selected from the group consisting of 4-methoxyphenol (MEHQ), 1,2-benzoquinone, 4-tert-butylcatechol (TBC), nitrosobenzene, picric acid, t-butylhydroquinone (TBHQ), hydroquinone, p-methoxyphenol, phenothiazine, tert-butylhydroquinone, 2,6-di-tert-butyl-p-cresol, 2-tert-butyl-1,4-benzoquinone, 6-tert-butyl-2,4-xylenol, 2,6-di-tert-butylphenol, 6-tert-butyl-2,4-xylenol, and 2,6-di-tert-butylphenol.

15. A lithium secondary battery comprising the gel polymer electrolyte of any one of claims 12 to 14, and a positive electrode and a negative electrode impregnated with the gel polymer electrolyte.
